# EUROPEAN PATENT APPLICATION

(11) **EP 4 631 338 A1**
(43) Date of publication of application: **15.10.2025**
(21) Application number: 23899716.7
(22) Date of filing: 14.11.2023
(51) Int. Cl.: A01D 34/74

(54) **HEIGHT ADJUSTING MECHANISM AND AUTONOMOUS OPERATING DEVICE**

(30) Priority: 09.12.2022 CN 202211581661; 09.12.2022 CN 202223326255 U; 09.12.2022 CN 202211581643
(71) Applicant: Zhejiang Sunseeker Industrial Co., Ltd., Jinhua, Zhejiang 321000 (CN)
(72) Inventor: RAN, Yuanzhong, Jinhua, Zhejiang 321000 (CN)
(74) Representative: Manna, Sara
(86) International application number: PCT/CN2023/131654
(87) International publication number: WO 2024/120136

(57) **Abstract**

The present disclosure discloses a height adjusting mechanism and an autonomous operation device. The height adjusting mechanism is applied to the autonomous operation device. The autonomous operation device includes a chassis and an operation assembly. The height adjusting mechanism includes a driving member and a connecting assembly, the driving member is connected to the chassis and provided with a driving shaft, and the driving shaft is able to rotate about an axis thereof; and the connecting assembly includes a connecting member, the connecting member is provided with a first end and a second end, the first end is connected to the driving shaft, and the second end is connected to the operation assembly. The height adjusting mechanism of the present disclosure is simple in structure and convenient to operate, and the height of the operation assembly can be accurately adjusted.

## Description

The present disclosure claims priority to the following patent applications, the disclosure of which is herein incorporated by reference in its entireties:
Chinese Patent Application No. 2022115816619, filed with the China National Intellectual Property Administration on December 09, 2022 and entitled "HEIGHT ADJUSTING MECHANISM AND AUTONOMOUS OPERATION DEVICE".
Chinese Patent Application No. 2022233262556, filed with the China National Intellectual Property Administration on December 09, 2022 and entitled "HEIGHT ADJUSTING MECHANISM AND AUTONOMOUS OPERATION DEVICE".
Chinese Patent Application No. 2022115816430, filed with the China National Intellectual Property Administration on December 09, 2022 and entitled "HEIGHT ADJUSTING MECHANISM AND AUTONOMOUS OPERATION DEVICE".

### TECHNICAL FIELD

A specific embodiment of the present disclosure relates to the field of garden tools, in particular to a height adjusting mechanism. Another specific embodiment of the present disclosure further relates to an autonomous operation device with the height adjusting mechanism.

### BACKGROUND

A lawn mower is a common mechanical tool for trimming lawns, vegetations, and the like. For most of existing robotic mowers, a user manually rotates a rotating part to drive an operation assembly to adjust up and down, the height adjusting process is relatively slow, and the height cannot be adjusted in the mowing process. At present, there are many patents relating to electric height adjustment of lawn mowers at home and abroad, for example, a height adjusting mechanism of a lawn mowing tool with publication number CN201830660U, where the height adjusting mechanism includes a lead screw and a nut, the nut is fixed and rotatable, the lead screw is provided with a vertical guide mechanism, the inside of the lead screw is hollow, and a blade driving motor can be installed in the lead screw; and a lawn mower and a sensor height control method with publication number CN107258207A, where the technical solution includes a rotating assembly, the rotating assembly can rotate and is provided with a first side wall perpendicular to an operation surface, rotating teeth are arranged on the surface of the first side wall, a sensing assembly is provided with a second side wall perpendicular to the operation surface, a rotating thread is provided on the surface of the second side wall opposite to the first side wall, the rotating thread meshes with the rotating teeth, a sensor is connected to the second side wall, and the sensing assembly moves relative to the operation surface along with the rotation of the rotating assembly. Height adjusting mechanisms of the existing lawn mowers mainly include the following four forms: a motor drives a gear to ascend and descend to adjust the height; a sliding block on a motor conductive lead screw ascends and descends to adjust the height; a motor drives a connecting rod movement mechanism to adjust the height; and the height is adjusted by raising a chassis of an entire lawn mower. The height adjusting mechanisms for adjusting the operation assembly are complicated in structure and inconvenient to operate, such that a height adjusting mechanism which is simple in mechanism and convenient to operate is urgently needed to adjust the height of the operation assembly.

### SUMMARY

The objective of the present disclosure is to provide an improved height adjusting mechanism and an autonomous operation device, which solve at least part of at least one of the above problems.

According to a first aspect of the present disclosure, the objective is at least partly achieved by a height adjusting mechanism. The height adjusting mechanism is applied to an autonomous operation device. The autonomous operation device includes a chassis and an operation assembly. The height adjusting mechanism includes: a driving member, connected to the chassis and being provided with a driving shaft, the driving shaft being able to rotate about an axis thereof; and a connecting assembly, including a connecting member, the connecting member being provided with a first end and a second end, the first end being connected to the driving member, the second end being connected to the operation assembly, and the connecting member being configured as a flexible connecting member.

According to another aspect of the present disclosure, the objective is at least partially achieved by an autonomous operation device. The autonomous operation device includes: a main body mechanism, including a chassis; a moving mechanism, configured to be mounted on the main body mechanism and drive the autonomous operation device to travel and steer; an operation assembly, connected to the chassis and able to move along a vertical direction; and the above height adjusting mechanism, the driving member being connected to a bottom of the chassis, the second end of the connecting member being connected to the operation assembly, and the connecting member operably driving the operation assembly to move along the vertical direction.

Therefore, the height adjusting mechanism and the autonomous operation device with the above features are simple in structure and convenient to operate, and can be configured to adjust the height of the operation assembly of a lawn mower.

The details of at least one embodiment will be set forth in the accompanying drawings and the description below. Other features, objectives, and advantages will be apparent from the description, the accompanying drawings, and the claims.

### DETAILED DESCRIPTION

To make the objectives, technical solutions, and advantages of embodiments of the present disclosure clearer, the following further describes the embodiments of the present disclosure in detail with reference to the accompanying drawings. However, those of ordinary skill in the art may understand that in various embodiments of the present disclosure, numerous technical details are set forth in order to better understand the present disclosure. However, the technical solutions claimed by the present disclosure can also be implemented even without these technical details and the various changes and modifications based on the following embodiments.

In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments.

Unless the context requires otherwise, throughout the specification and claims, the words "comprise", "include", and variations thereof, such as "comprises", "comprising", "includes", and "including", should be understood as having an open and inclusive meaning, that is, should be interpreted as "includes, but is not limited to".

The embodiments of the present disclosure will be described in detail below with reference to the accompanying drawings, such that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification are not necessarily all refer to the same embodiment. In addition, particular features, structures, or characteristics may be combined in any manner in one or more embodiments.

As used in this specification and the appended claims, the singular forms "a" and "the" include plural references, unless otherwise specified clearly in the context. It should be noted that the term "or" is generally used as a meaning of "and/or", unless otherwise specified clearly in the context.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

A specific embodiment of the present disclosure relates to a height adjusting mechanism 3 applied to an autonomous operation device. The height adjusting mechanism is configured to adjust the height of an operation assembly 2 of the autonomous operation device. In the present embodiment, the autonomous operation device is typically an intelligent lawn mower 100, and the operation assembly 2 is typically a cutting assembly. An intelligent lawn mower 100 and a height adjusting mechanism 3 of a specific embodiment of the present disclosure will be described in detail below with reference to the accompanying drawings.

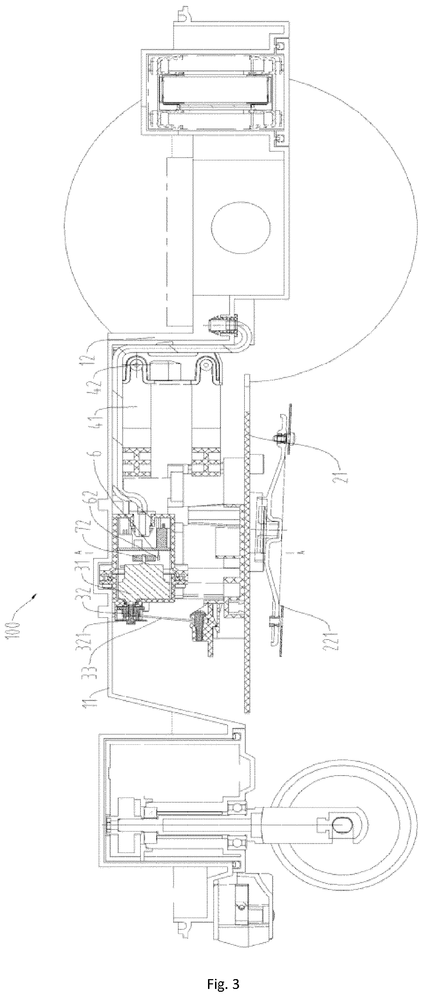

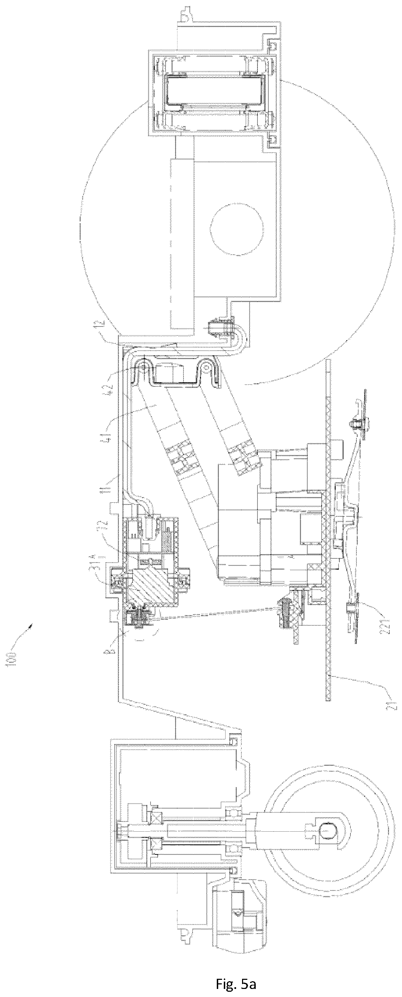

The intelligent lawn mower 100 further includes a chassis 1, an operation assembly 2 disposed below the chassis 1, and the height adjusting mechanism 3 for adjusting the height of the operation assembly 2. The chassis 1 is recessed toward the top to form a top wall 11 and two side walls 12, as shown in FIG. 3 and FIG. 5a, the top wall 11 is spaced from the bottom surface and connected to the tops of the two side walls 12, and the two side walls 12 are spaced apart along a front-rear direction of a vehicle body and cooperate with the top wall 11 to form an independent space, so as to facilitate the ascending or descending of the operation assembly 2. The operation assembly 2 is connected to the side walls 12 through two connecting rod groups 41, i.e. the operation assembly can move up and down below the top wall 11. Specifically, in the present embodiment, the operation assembly 2 includes a cutterhead shield 21 and a cutterhead assembly 22 disposed on the cutterhead shield 21, the cutterhead assembly 22 includes two groups of cutterheads 221 and two motors 222 for driving the two groups of cutterheads 221 to rotate, and the two motors 222 respectively and independently drive the two groups of cutterheads 221 to rotate so as to cut vegetations. It should be understood that in some embodiments, more motors 222 or more groups of cutterheads 221 may be installed without limiting the number of motors 22 and cutterheads 221.

The cutterhead shield 21 is connected to the side walls 12 through two connecting rod groups 41 and can be driven by the height adjusting structure 3 to drive the cutterhead assembly 22 to move up and down so as to adjust the height of the cutterhead assembly 22 relative to the ground. The cutterhead shield 21 serves to prevent a user from touch the cutterheads 221. It should be understood that the cutterheads 221 may be mounted directly below the chassis 1 without mounting the cutterhead shield 21.

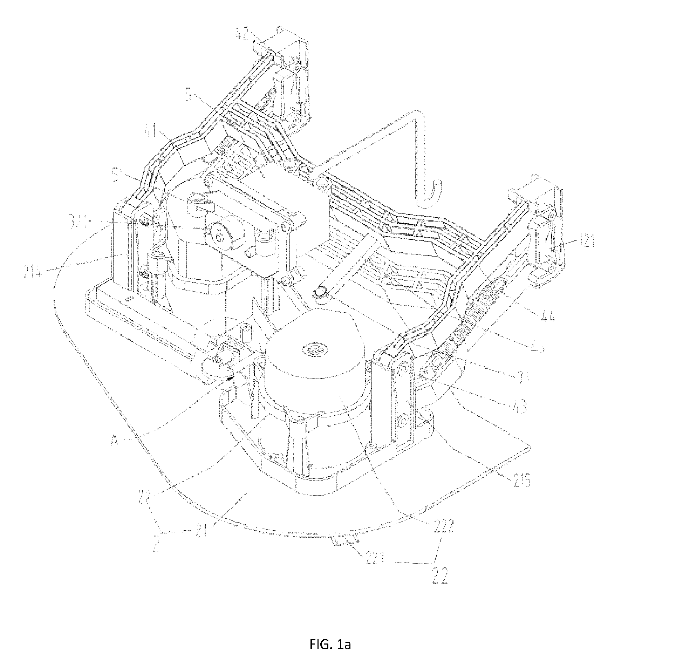

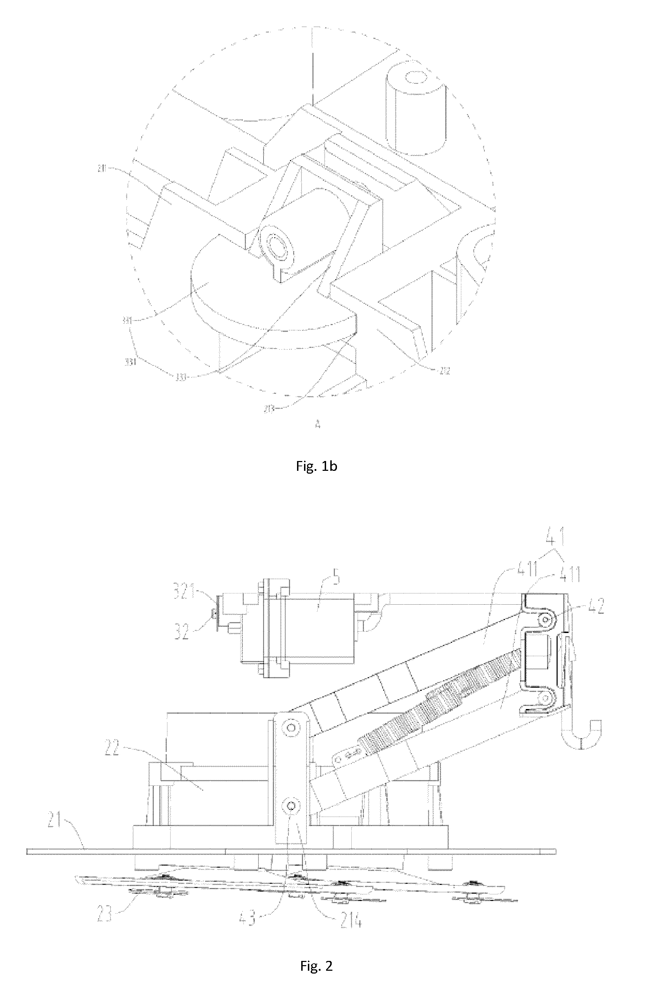

The height adjusting mechanism 3 includes a motor 31, a connecting member 33 and a connecting assembly, as shown in FIG. 1a, FIG. 1b and FIG. 2, the motor 31 is configured to drive the cutterhead shield 21 to move up and down, the connecting member 33 is configured to be connected to the motor 31 and the cutterhead shield 21, and a limiting assembly is configured to limit a movement direction of the cutterhead shield 21. In the embodiment shown in the figure, the motor 31 adopts a brushed motor, such that on one hand, the operation frequency of the mowing height adjusting function is low, and the service life requirement is low; and on the other hand, the cost is reduced. It should be understood that in other embodiments, the motor 31 may be a brushless motor or other driving member, or a driving shaft is manually and mechanically rotated, and the embodiment of the driving member is not limited.

In addition, as shown in FIG. 3 and FIG. 5a, the motor 31 is connected to the bottom of the top wall 11. An output shaft of the motor 31 is a driving shaft 32, and the driving shaft 32 extends along a horizontal direction, and the driving shaft 32 can be driven to rotate around a horizontal axis thereof. The connecting assembly includes the connecting member 33, a first end of the connecting member 33 is connected to the driving shaft 32, and a second end of the connecting member 22 is connected to the top of the cutterhead shield 21. When the motor 31 is started, the driving shaft 32 enables the connecting member 33 to wind around the periphery of the driving shaft in the rotating process, and the cutterhead shield 21 is driven to move up and down through continuous winding of the connecting member 33. An intermediate portion of the connecting member 33 is deformable to allow the operation assembly 2 to be displaced upward when the operation assembly 2 is subjected to an upward force from a ground obstacle (typically dense grass or rocks).

Compared with the prior art in which the height of the operation assembly 2 is adjusted by the cooperation of the motor 222 with a gear, a lead screw or a connecting rod, the structure of the present embodiment is very simple, the operation is convenient, the adaptability is high, and the market prospect is wide.

In other embodiments, the driving shaft 32 may also extend along a vertical direction and rotate around a vertical axis thereof, the first end of the connecting member 33 is connected to the driving shaft 32, the second end of the connecting member 33 is connected to the cutterhead shield 21, a plurality of guide rollers are disposed on an extending path of the connecting member 33, configured to change an extending direction of the connecting member 33, and enable the portion of the connecting member 33 near the first end to extend along the horizontal direction and the portion near the second end to extend along the vertical direction, and the connecting member 33 moves around the guide rollers and winds around the periphery of the driving shaft 32 when the driving shaft 32 rotates.

It should be understood that the connecting member 33 may employ a rope, a wire rope, a canvas belt, a nylon rope/belt, a chain, etc., without limiting the type of the connecting member. But considering that the wire rope, the nylon rope, or the nylon belt are likely to be bounced open during winding, and the canvas belt has relatively poor weather resistance, poor strength, etc., in optimal implementation solutions, the connecting member 33 employs an aramid rope or aramid belt, preferably, a rope or belt woven and knotted with Kevlar^{®} as raw materials, aramid has good mechanical properties, for example, high strength, stable chemical properties and high endurance, which is applicable to the height adjusting mechanism 3 of the present embodiment.

In addition, in order to prolong the service life of the height adjusting mechanism 3, the connecting member 33 not only has certain softness and crimpability, but also needs to have high flexibility, high strength, wear resistance, low elongation, high weather resistance, low thermal expansion coefficient, and other properties. Taking Kevlar materials as an example, an elastic modulus range of Kevlar should be 100 GPa to 200 GPa, preferably 120 GPa to 140 GPa, theoretically, a breaking force of Kevlar is not less than 50 N, and practically, the breaking force of Kevlar should be more than 200 N to 300 N to meet the requirement.

The abrasion resistance of the connecting member 33 made of fibers is tested with reference to the FZ/T50025-2014 method, and the number of times of rubbing is not less than 1000 times, preferably not less than 3000 times. In addition, an elongation at break of the connecting member is not more than 5%, preferably not more than 3.8%, and most preferably not more than 3%. An absolute value of a thermal expansion coefficient is not more than 15×10⁻⁶/°C, and preferably, the absolute value of the thermal expansion coefficient is not more than 3×10⁻⁶/°C.

The second end of the connecting member 33 is clamped with the cutterhead shield 21 through a clamping member 331. As shown in FIG. 1a and FIG. 1b, the clamping member 331 includes a flat clamping block 332 and a connecting portion 333 located on the top surface of the clamping block 332, and the clamping block 332 is flat on the whole. The connecting portion 333 is located on the top surface of the clamping block 332 and connected to the second end of the connecting member 33, and the circumferential edge of the clamping block 332 is configured to be clamped with the cutterhead shield 21. Specifically, the top surface of the cutterhead shield 21 is provided with a first convex block 211 and a second convex block 212 which are spaced apart oppositely, the first convex block 211 and the second convex block 212 are both provided with clamping grooves 213 which are open towards each other, the two clamping grooves 213 are formed by inwards recessing the end surfaces of the first convex block 211 and the second convex block 212 respectively, two sides of the clamping block 332 may be clamped into the two clamping grooves 213 from the end surfaces of the first convex block 211 and the second convex block 212 respectively, and the connecting portion 333 is located between the first convex block 211 and the second convex block 212 and is conveniently connected to the second end of the connecting member 33. After the intelligent lawn mower 100 is used for a period of time, the connecting member 331 may be taken out of the clamping grooves 213, the connecting member 33 is replaced, and the height adjusting mechanism 3 is convenient to maintain. It should be understood that the shapes of the clamping block 332 and the clamping grooves 213 are not limited, and other shapes may be used as long as the connecting member 331 and the operation assembly 2 can be conveniently clamped. In addition, the connecting member 33 may be detachably connected to the cutterhead shield 21 in other manners, for example, the connecting member may be directly connected to the top surface of the cutterhead shield 21 by knotting, and the detachable connection manner of the connecting member 33 and the cutterhead shield 21 is not limited.

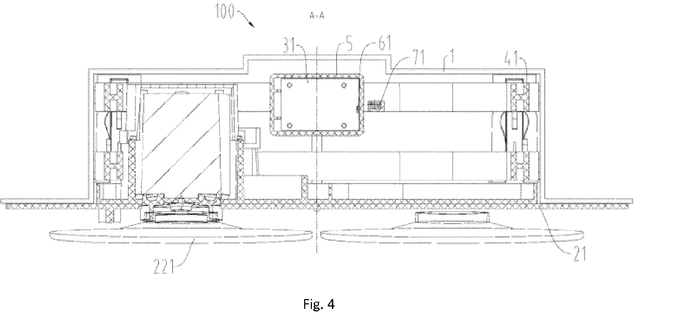

The chassis 1 is further provided with a limiting assembly, and in the process that the motor 31 drives the limiting assembly 2 to ascend or descend, the limiting assembly can limit the offset of the operation assembly 2 along the horizontal direction in the ascending and descending process. In the embodiment shown in FIG. 2 and FIG. 4, the limiting assembly includes two connecting rod groups 41 with the same shape, the two connecting rod groups 41 are aligned and spaced apart along the horizontal direction, head ends of the two connecting rod groups 41 are hinged to the same side wall 12 of the chassis 1 through hinge shafts, and tail ends of the two connecting rod groups 41 are hinged to the operation assembly 2 through hinge shafts. Specifically, each connecting rod group 41 includes two connecting rods 411, the two connecting rods 411 are spaced apart along the vertical direction and are the same in length, the head ends of the two connecting rods 411 are connected to the side wall 12 of the chassis 1 through two first hinge shafts 42 respectively, the side wall 12 extends along the vertical direction, the two first hinge shafts 42 are aligned along the vertical direction, and axes of the two first hinge shafts 42 extend along the horizontal direction. The tail ends of the two connecting rods 411 are connected to connecting seats 214 of the top surface of the cutterhead shield 21 through two second hinge shafts 43 respectively, the connecting seats 214 extend along the vertical direction, and the two second hinge shafts 43 are fixed to two positions of the connecting seats 214 along the vertical direction, and axes of the two second hinge shafts 43 also extend along the horizontal direction and are aligned at an interval along the vertical direction. An interval between the two first hinge shafts 42 is the same as an interval between the two second hinge shafts 43, and lengths of the two connecting rods 411 in each connecting rod group 41 are also the same, that is, the two connecting rods 411, the interval between the two first hinge shafts 42, and the interval between the two second hinge shafts 43 form a parallelogram structure. The two first hinge shafts 42 are fixed to the side wall 12 and are spaced apart along the vertical direction, that is, in the rotating process of the two connecting rod groups 41, the two second hinge shafts 43 are always in the state of being aligned along the vertical direction, that is, the connecting seats 214 bearing the two second hinge shafts 43 are always in the vertical direction, such that the cutterhead shield 21 is always in the horizontal direction, and the stability of the cutterhead shield 21 and the cutterhead assembly 21 in the rotating process is ensured.

In addition, in order to prevent each connecting rod group 41 from moving along an axis direction thereof, the side wall 12 is further provided with two groups of first limiting plates 121. As shown in FIG. 1a and FIG. 2, the two limiting plates of each group of first limiting plates 121 are disposed on two sides of the two first hinge shafts 42 connected to each connecting rod group 41 along the axis direction thereof respectively, so as to limit the connecting rod group 41 from translating along the first hinge shafts 42. The two connecting seats 214 are also each provided with a group of second limiting plates 215 extending along the vertical direction, and two limiting plates of each group of second limiting plates 215 are located on two sides of the second hinge shafts 43 along the axis direction thereof respectively, so as to limit the cutterhead shield 21 from translating along the second hinge shafts 43. The two groups of first limiting plates 121 are configured to limit the translation of two connecting rod groups 41 along the horizontal direction, the two groups of second limiting plates 215 can limit the translation of the operation assembly 2 relative to the two connecting rod groups 41 along the horizontal direction, and the two groups of first limiting plates 121 and the two groups of second limiting plates 215 cooperate to limit the translation of the operation assembly 2 along a left-right direction of the vehicle body.

In addition, two support rods 44 are further disposed between the two connecting rod groups 41, the two support rods 44 extend along the horizontal direction, one support rod 44 is connected to two upper connecting rods 411 in each connecting rod group 41, the other support rod 44 is connected to two lower connecting rods 411 in each connecting rod group 41, and the support rods 44 can enable the two connecting rod groups 41 to rotate synchronously, which is conducive to the stability of the operation assembly 2. The middle section of the upper support rod 44 is further provided with a cantilever 45, a proximal end of the cantilever 45 is connected to the connecting rods 44, and a distal end of the cantilever extends above the operation assembly 2, is located at a predetermined position above the operation assembly 2, and is configured to mount a third sensing element 71, which will be described in detail below. It should be understood that only one support rod 44 may be provided, and the support rod 44 may be connected to any two connecting rods 411 of the two connecting rod groups 41 that are aligned along the horizontal direction, and may also assist the two connecting rod groups 41 to move synchronously. In addition, the cantilever 45 may be connected to any one of the support rods 44.

It should be understood that in some embodiments, the limiting assembly is configured to only be provided with at least one connecting rod group 41 or one connecting rod group 41, and may also drive the operation assembly 2 to move along the vertical direction.

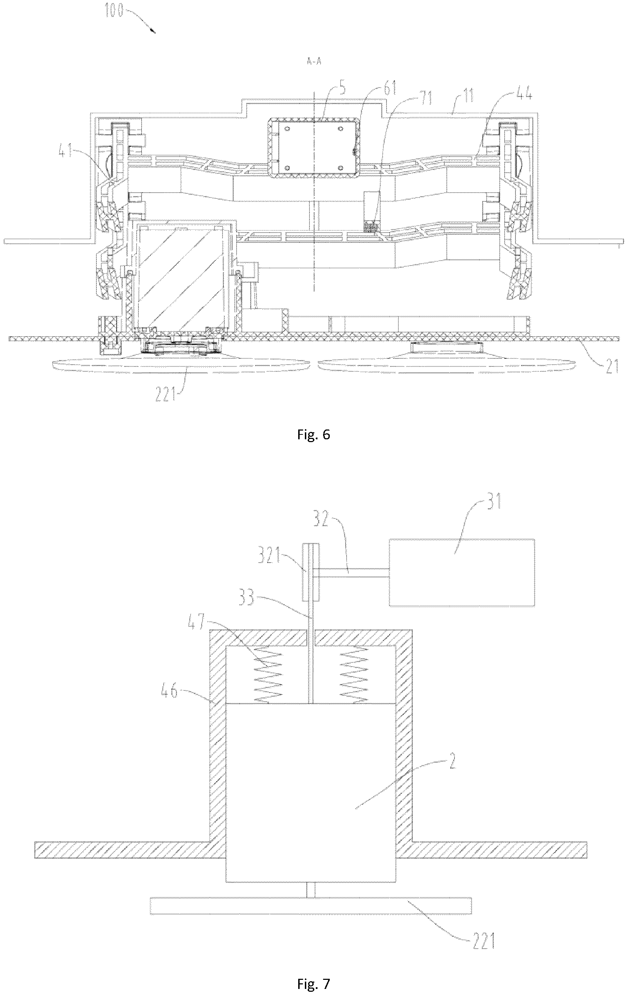

It should be understood that in some other embodiments, the limiting assembly may be configured in other structures as long as the limiting assembly can limit movement of the operation assembly 2 along the left-right direction of the vehicle body but not limit movement of the cutterhead assembly 22 in the vertical direction. Exemplarily, as shown in FIG. 7, the limiting assembly is configured as a limiting sliding rail 46 connected to the chassis 1, the limiting sliding rail 46 is cylindrical and extends along the vertical direction, the outer side of the limiting sliding rail 46 along the horizontal direction may be fixedly connected to the two side walls 12 of the chassis 1, and the inner wall of the limiting sliding rail fits the whole or part of the operation assembly 2. The operation assembly 2 is located in the limiting sliding rail 46, the top surface of the operation assembly 2 is connected to the connecting member 33, and the connecting member 33 penetrates out of the top of the limiting sliding rail 46 and is connected to the driving shaft 32. The limiting sliding rail 46 may allow the operation assembly 2 to move along the vertical direction and may also limit movement of the operation assembly 2 along the horizontal direction. In addition, a spring is further disposed on the top of the operation assembly 2, a bottom end of the spring 47 is connected to the operation assembly 2, a top end of the spring 47 is connected to the top of the limiting sliding rail 46, and when the operation assembly 2 moves from bottom to top, the spring 47 may assist in driving the operation assembly 2 to move.

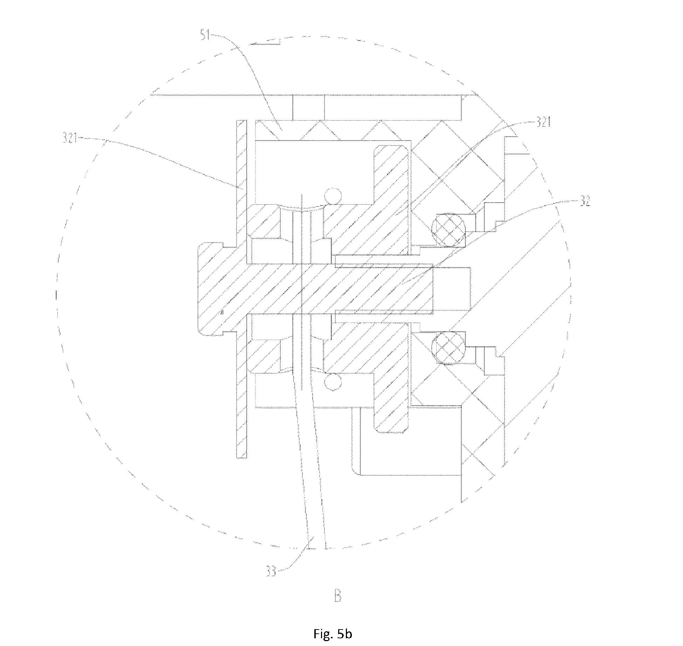

A cover body 5 is further disposed outside the motor 31, as shown in FIG. 3, FIG. 5a, and FIG. 5b, the cover body 5 is connected to the bottom surface of the top wall 11, the motor 31 is located inside the cover body 5, the driving shaft 32 extends out of the cover body 5 along the horizontal direction, and the connecting member 33 is connected to the driving shaft 32 located outside the cover 5. In addition, the driving shaft 32 is further provided with two limiting rings 321, the two limiting rings 321 extend along a circumferential direction of the driving shaft 32 to form a ring shape and are spaced apart along the axis direction of the driving shaft 32, and the two limiting rings 321 are located outside the cover body 5. A winding space is formed between the two limiting rings 321, one limiting ring 321 distal to the motor is positioned at the end portion of the driving shaft 32 and has a diameter greater than that of the other limiting ring 321, the first end of the connecting member 33 is located in the winding space between the two limiting rings 321 and connected to the driving shaft 32, and the two limiting rings 321 can prevent the connecting member 33 from being separated from the driving shaft 32 in the process of winding the connecting member 33 on the driving shaft 32. In the moving process of the driving shaft 32, the connecting member 33 continuously winds the driving shaft 32, and the two limiting rings 321 can prevent the connecting member 33 from knocking over in the winding process and affecting the operation of the height adjusting mechanism 3. In addition, a brim portion 51 is further disposed on the outer portion of the cover body 5, the brim portion 51 is arc-shaped and extends around the top of the driving shaft 32, and the brim portion 51 covers the winding space, such that the connecting member 33 can be further prevented from being separated from the driving shaft 32.

As a preferable solution, the operation assembly 2 or the limiting assembly is further provided with a first sensor assembly, and the first sensor assembly is configured to detect position information of the operation assembly relative to the chassis 1, particularly detect whether the operation assembly reaches a calibration position. Specifically, the first sensor assembly includes a first sensing element 61 and a third sensing element 71 cooperating with the first sensing element 61. In the present embodiment, the first sensing element 61 is configured as a Hall sensor, and the third sensing element 71 is configured as a permanent magnet. The third sensing element 71 is disposed at a distal end of the cantilever 45, the first sensing element 61 is disposed on the chassis 1 and substantially aligned with the third sensing element 71 along the vertical direction, when the cantilever 45 ascends or descends along with the connecting rod groups 41, a distance between the third sensing element 71 and the first sensing element 61 changes, and the first sensing element 61 can sense a magnetic field change of the third sensing element 71, so as to detect the position of the operation assembly 2.

In the embodiment shown in FIG. 3 and FIG. 4, the operation assembly 2 is located at the highest position, the third sensing element 71 is aligned with and gets close to the first sensing element 61 along the horizontal direction, and at the moment, the height of the operation assembly 2 relative to the bottom surface is 80 cm. In the embodiment shown in FIG. 5 and FIG. 6, the third sensing element 71 is located below the first sensing element 61, and the operation assembly 2 is located at the lowest position at a height of 20 cm from the bottom surface.

The first sensing element 61 and the third sensing element 71 cooperate to further calibrate the highest position of the operation assembly 2, and as the third sensing element 71 gradually ascends, when the third sensing element 71 moves to be substantially aligned with the first sensing element 61 along the horizontal plane, at the moment, the operation assembly 2 is located at the highest position, the first sensing element 61 can sense the polarity change of a magnetic field of the third sensing element 71, and a signal can be transmitted to a controller to complete the height calibration of the operation assembly 2. In addition, the third sensing element 71 may also be directly disposed on the top of the operation assembly 2 and disposed corresponding to the first sensing element 61 along the vertical direction, and may also be configured to cooperate with the first sensing element 61 to detect the position of the operation assembly 2.

It should be understood that the third sensing element 71 may also be disposed on the operation assembly 2 or the limiting assembly and correspond to the first sensing element 61 along the vertical direction, as long as the third sensing element can cooperate with the first sensing element 61 to detect the position of the operation assembly 2.

As another preferred solution, the driving shaft 32 is further provided with a second sensor assembly, configured to detect a number of revolutions or a rotation speed of the driving shaft 32. Specifically, the second sensor assembly includes a second sensing element 62 and a fourth sensing element 72 cooperating with the second sensing element 62, and the fourth sensing element 72 is disposed on a radial outer side of the driving shaft 32. Specifically, the fourth sensing element 72 is a magnetic code disc, disposed at one end of the driving shaft 32 located inside the cover body 5, and disposed coaxially with the driving shaft 32, the fourth sensing element 72 can rotate along with the driving shaft 32, and the second sensing element 62 is located below the fourth sensing element 71 and can sense a magnetic field change of the fourth sensing element 72 in the rotating process, so as to detect the rotation of the driving shaft 32. The controller may calculate height change information of the operation assembly based on the size (typically diameter, radius or circumference) and the number of revolutions of the driving shaft. It should be understood that the second sensing element 62 may be disposed above or on the left or right side of the fourth sensing element 72, and may also be configured to cooperate with the fourth sensing element 71 to detect the number of revolutions or the rotation speed of the driving shaft 32.

In the embodiment shown in FIG. 3 and FIG. 5, a circuit board 6 is further disposed inside the cover body 5, and the circuit board 6 is provided with a plurality of electronic components, including but not limited to the first sensing element 61 and/or the second sensing element 62 described above. In the present embodiment, the first sensing element 61 and the second sensing element 62 are configured to be disposed on the same circuit board 6. In some embodiments, the first sensing element 61 and the second sensing element 62 are configured to be disposed on two different circuit boards 6 respectively. In the present embodiment, the first sensing element 61 and the second sensing element 62 are both Hall sensors. In some embodiments, the first sensing element 61 and the second sensing element 62 may be other types of sensors according to actual requirements.

In addition, the circuit board 6 is connected to an external controller, and the circuit board 6 may transmit information of the first sensing element 61 and the second sensing element 62 to the controller. The controller is further electrically connected to the motor 31 and the circuit board 6. The controller may judge the number of revolutions or the rotation speed of the driving shaft 32 according to the first sensing element 61 and may further judge the position of the operation assembly 2 according to the information of the second sensing element 62. When the height of the operation assembly 2 needs to be adjusted, the controller judges the position of the operation assembly 2 according to the second sensing element 62, then the motor 31 is started to operate, and then the height of the operation assembly 2 is accurately adjusted according to the number of revolutions or the rotation speed of the driving shaft 32 and the size of the driving shaft 32. Typically, the height adjustment is controlled by controlling the number of revolutions of the driving shaft 32 when the number of revolutions of the driving shaft 32 serves as a basis; and the height adjustment is controlled by controlling the rotation time of the driving shaft 32 when the rotation speed of the driving shaft 32 serves as a basis.

The height adjusting mechanism 3 of the present embodiment is simple in structure and convenient to operate, and is further provided with the first sensing element 61 and the second sensing element 62 to control the operation of the motor 31 so as to accurately adjust the height of the operation assembly 2.

A specific embodiment of the present disclosure further relates to an autonomous operation device. The autonomous operation device is, in particular, a robot that can autonomously move in a preset region and perform a specific operation, typically such as an intelligent sweeper/vacuum cleaner performing a cleaning operation, or an intelligent lawn mower 100 performing a lawn mowing operation. The specific operation, in particular, refers to an operation that processes the work surface and changes the state of the work surface. Specifically, the autonomous operation device at least includes a main body mechanism, a moving mechanism, the above operation assembly 2, the above height adjusting mechanism, and the like.

The main body mechanism generally includes a chassis 1 and a housing, and the chassis 1 is configured to mount and accommodate the moving mechanism, the operation assembly 2, the above height adjusting mechanism, and other functional mechanisms and functional modules. The housing is typically configured to at least partially cover the chassis 1, primarily for enhancing the aesthetics and recognizability of the autonomous operation device.

The moving mechanism is configured to support the main body mechanism on the ground and drive the main body mechanism to move on the ground, and generally includes a wheeled moving mechanism, a tracked or semi-tracked moving mechanism, a walking moving mechanism, or the like. The linear travel of the autonomous operation device is achieved by the equidirectional and constant-speed rotation of left and right driving wheels, and the steering travel is achieved by the equidirectional differential or opposite-direction rotation of the left and right driving wheels. In other embodiments, the moving mechanism may further include a steering mechanism independent of the driving wheels and a steering prime mover independent of the walking prime mover.

The controller typically includes at least one processor and at least one non-transient computer-readable storage medium. The non-transient computer-readable storage medium stores pre-written executable instructions, and the processor, according to the executable instructions, controls the performance of movement, operation, and the like of the autonomous operation device.

The operation assembly 2 is connected to the chassis 1 and may move along the vertical direction, the driving member of the height adjusting mechanism 3 is connected to the bottom of the chassis 1, and the second end of the connecting member is connected to the operation assembly 2 and may operably drive the operation assembly 2 to move along the vertical direction.

Since the connecting member 33 is configured as a flexible rope wound around the driving shaft 32 in the present embodiment, the height adjustment may have errors due to the elasticity of the material of the connecting member 33, the winding position, the degree of tightness, and the like, and thus the height calibration of the operation assembly 2 is required frequently. In order to solve the problem, a specific embodiment of the present disclosure further discloses a method for adjusting a height of an operation assembly of an autonomous operation device. The method includes the following steps:
In S1, a height adjusting instruction is received.

In S21, whether a preset calibration condition is reached or not is judged; and if the preset calibration condition is reached, S22 is performed.

In S22, the operation assembly 2 is adjusted to a calibration position.

In S23, the operation assembly 2 is adjusted to a target height.

In S1, the height adjusting instruction is directly input by a user, and includes the target height specified by the user. In some embodiments, the height adjusting instruction is automatically generated by a preset program, typically an application scenario involving cutting a pattern on a preset lawn using a robotic mower.

In S21, the preset calibration condition includes at least one of inputting a calibration instruction by the user, or reaching a calibration cycle. The calibration cycle includes at least one of a time cycle, or a cycle of a number of times of a specific event. In some embodiments, in response to inputting the calibration instruction by the user, it is judged that the preset calibration condition is reached. In some embodiments, in response to reaching the calibration cycle, it is judged that the preset calibration condition is reached. In some embodiments, the autonomous operation robot judges, in response to a combination of inputting the calibration instruction by the user and reaching the calibration cycle, that the preset calibration condition is reached. In some embodiments, the specific event includes at least one of starting to execute an operation, ending to execute the operation, or starting to execute the height adjustment for the operation assembly.

In some embodiments, user instructions, such as the height adjusting instruction, the calibration instruction, or the like, are input by the user through a man-machine interaction device disposed on the autonomous operation device, where the man-machine interaction device is exemplarily configured as an operable key, an operable touch screen, a voice recognition system, or the like. In some embodiments, the user instructions are input by the user through a mobile terminal, and instruction signals are transmitted to the autonomous operation device through a wired or wireless communication connection.

In some embodiments, the autonomous operation device includes a timing module, and the timing module is configured to detect the time cycle. Typically, after the autonomous operation device performs S22, the timing module starts recording an operation time length of the autonomous operation device; and when the operation time length reaches a preset time length, it is judged that the preset calibration condition is reached, and the timing module is reset, and executes height calibration when the height of the operation assembly is adjusted next time.

In some embodiments, the autonomous operation device includes a counting module, and the counting module is configured to detect the cycle of the number of times of the specific event. The specific event includes at least one of starting to execute an operation, ending to execute the operation, or executing the height adjustment for the operation assembly. Typically, after the autonomous operation device performs S22, the counting module starts recording a number of times of starting or ending to execute the operation by the autonomous operation device; and when the number of times of starting or ending to execute the operation by the autonomous operation device reaches a preset number of times, it is judged that the preset calibration condition is reached, and the counting module is reset, and executes height calibration when the height of the operation assembly is adjusted next time. In some embodiments, after the autonomous operation device performs S22, the counting module starts recording a number of times of executing the height adjustment for the operation assembly by the autonomous operation device; and when the number of times of executing the height adjustment for the operation assembly by the autonomous operation device reaches a preset number of times, it is judged that the preset calibration condition is reached, and the counting module is reset, and executes height calibration when the height of the operation assembly is adjusted next time.

In some embodiments, after the timing module or the counting module is reset, other suitable time may be selected for height calibration, typically when the operation is started after charging is finished.

In some embodiments, receiving the height adjusting instruction is a pre-step of the height calibration. In some other embodiments, receiving the height adjusting instruction is not a pre-step of height calibration. Specifically, the autonomous operation device performs height calibration once he preset calibration condition is reached during operation.

In some embodiments, the calibration position is the highest position to which the operation assembly can move in the height direction, typically the highest position being defined by the chassis 1. S22 includes driving the driving shaft 32 to rotate towards a first direction, the connecting member 33 gradually winds around the driving shaft 32, and the operation assembly 2 moves upward; and when the first sensing element 61 senses the polarity change of the third sensing element 71, that is, it is determined that the operation assembly reaches the calibration position, and the rotation of the driving shaft 32 is stopped. S23 includes driving the driving shaft 32 to rotate towards a second direction, the connecting member 33 is gradually released from the driving shaft 32, the operation assembly 2 moves downward, and the number of revolutions of the driving shaft 32 is controlled based on the target height to make the operation assembly reach the target height position. The first direction and the second direction are opposite. In one embodiment, S23 includes calculating the height change information of the operation assembly 2 based on the size of the driving shaft 32 and the number of revolutions of the driving shaft 32.

In some embodiments, the calibration position may also be the lowest position to which the operation assembly 2 can move in the height direction, the lowest position is generally defined by the length of the connecting member 33, that is, when the operation assembly 3 is located at the lowest position, the connecting member 33 is completely released from the driving shaft 32 and tightened. S22 includes driving the driving shaft 32 to rotate towards the second direction, the connecting member 33 is gradually released from the driving shaft 32, and the operation assembly moves downward. S23 includes driving the driving shaft 32 to rotate towards the first direction, the connecting member 33 gradually winds around the driving shaft, and the operation assembly moves upward. In the present embodiment, the position of the first sensor assembly needs to be adaptively adjusted.

The intelligent lawn mower 100 disclosed by the above embodiments is simple in structure, convenient to operate, capable of accurately adjusting the height of the operation assembly 22, high in adaptability, and wide in market prospect.

The preferred embodiments of the present disclosure have been described in detail above. However, it should be understood that an aspect of the embodiments can be modified, if necessary, to employ aspects, features and concepts of the various patents, applications and publications to provide another embodiment.

These and other modifications can be made to the embodiments based on the detailed description described above. Generally, in the claims, the terms used should not be construed to be limited to the specific embodiments disclosed in this specification and the claims, but should be construed to include all possible embodiments along with the full scope of equivalents to which such claims are entitled.

Those of ordinary skill in the art can understand that the various embodiments mentioned above represent specific embodiments to realize the present disclosure. In practical applications, various alterations can be made in form and detail without departing from the spirit and scope of the present disclosure.

## Claims

1. A height adjusting mechanism, applied to an autonomous operation device, the autonomous operation device comprising a chassis and an operation assembly, the height adjusting mechanism comprising:
a driving member, connected to the chassis and being provided with a driving shaft,
the driving shaft being able to rotate about an axis thereof; and
a connecting assembly, comprising a connecting member, the connecting member being provided with a first end and a second end, the first end being connected to the driving member, the second end being connected to the operation assembly, and the connecting member being configured as a flexible connecting member.

2. The height adjusting mechanism according to claim 0, wherein the first end of the connecting member is able to wind the driving shaft along with rotation of the driving shaft.

3. The height adjusting mechanism according to claim 0, further comprising a limiting assembly, wherein the limiting assembly is connected to the chassis and configured to operably limit a movement direction of the operation assembly.

4. The height adjusting mechanism according to claim 0, wherein the limiting assembly comprises at least one connecting rod group, head ends of connecting rods are hinged to the chassis, and tail ends of the connecting rods are hinged to the operation assembly.

5. The height adjusting mechanism according to claim 0, wherein the limiting assembly comprises two connecting rod groups; the two connecting rod groups are spaced apart along a horizontal direction; and each connecting rod group comprises two connecting rods, the two connecting rods are the same in length and spaced apart along a vertical direction, the head ends of the two connecting rods are hinged to the chassis through two first hinge shafts separately, and the tail ends of the two connecting rods are connected to the operation assembly through two second hinge shafts respectively.

6. The height adjusting mechanism according to claim 0, wherein the limiting assembly comprises a cylindrical limiting sliding rail, the limiting sliding rail extends along the vertical direction and is connected to the chassis, an inner wall of the limiting sliding rail fits a periphery of the operation assembly and allows the operation assembly to move along the vertical direction, and the connecting member is connected to a top of the operation assembly.

7. The height adjusting mechanism according to any one of claims 0-6, further comprising a second sensor assembly, configured to detect height variation information of the operation assembly.

8. The height adjusting mechanism according to claim 0, wherein the second sensor assembly comprises a second sensing element and a fourth sensing element cooperating with the second sensing element, the fourth sensing element is disposed on a radial outer side of the driving shaft, and the second sensing element is connected to the chassis, corresponds to the fourth sensing element, and is configured to cooperate with the fourth sensing element for sensing a number of revolutions or a rotation speed of the driving shaft.

9. The height adjusting mechanism according to claim 0, further comprising:
a circuit board, the second sensing element being disposed on the circuit board; and
a controller, connecting to the circuit board and the driving member, and configured to receive a second signal of the second sensing element, and at least control the driving member to run or stop according to the second signal.

10. The height adjusting mechanism according to claim 0, further comprising a first sensor assembly, configured to detect relative positional information of the operation assembly and the chassis.

11. The height adjusting mechanism according to claim 0, wherein the first sensor assembly comprises a first sensing element and a third sensing element cooperating with the first sensing element, the third sensing element is disposed on the operation assembly or the limiting assembly, and the first sensing element is disposed on the chassis and configured to cooperate with the third sensing element to sense a position of the operation assembly.

12. The height adjusting mechanism according to claim 0, further comprising:
a circuit board, the first sensing element being disposed on the circuit board; and
a controller, connecting to the circuit board and the driving member, and configured to receive a first signal of the first sensing element, and at least control the driving member to run or stop according to the first signal.

13. The height adjusting mechanism according to claim 0, wherein the limiting assembly further comprises a cantilever, a proximal end of the cantilever is connected to the connecting rod groups, and a distal end of the cantilever extends above the operation assembly; and the third sensing element is located at the distal end of the cantilever.

14. The height adjusting mechanism according to claim 0, further comprising a cover body, wherein a top of the cover body is connected to the chassis; and the driving member is a motor, the motor is located in the cover body, and the driving shaft extends out of the cover body.

15. The height adjusting mechanism according to claim 0, wherein an end of the driving shaft distal to the motor is provided with a first limiting ring and a second limiting ring spaced apart along an axis direction of the driving shaft, and the first end of the connecting member is located between the first limiting ring and the second limiting ring.

16. The height adjusting mechanism according to claim 0, wherein the connecting member is a rope and made of aramid fibers.

17. The height adjusting mechanism according to claim 0, wherein the connecting member is configured to satisfy at least one of the following physical characteristics: an elastic modulus range of the connecting member is 120 GPa to 140 GPa; a breaking tension of the connecting member is greater than or equal to 200 N; an elongation at break of the connecting member is less than or equal to 3%; and an absolute value of a thermal expansion coefficient of the connecting member is less than or equal to 3×10⁻⁶/°C.

18. The height adjusting mechanism according to claim 0, wherein the second end of the connecting member is removably connected to the operation assembly.

19. The height adjusting mechanism according to claim 0, wherein the connecting assembly further comprises a clamping member, the clamping member comprises a connecting portion and a clamping block, the connecting portion is connected to the second end of the connecting member, and the clamping block is configured to be clamped into a clamping groove of the operation assembly.

20. An autonomous operation device, comprising:
a main body mechanism, comprising a chassis;
a moving mechanism, configured to be mounted on the main body mechanism and drive the autonomous operation device to travel and steer;
an operation assembly, connected to the chassis and able to move along a vertical direction; and
the height adjusting mechanism according to any one of claims 0-19, the driving member being connected to a bottom of the chassis, the second end of the connecting member being connected to the operation assembly, and the connecting member operably driving the operation assembly to move along the vertical direction.
